# EUROPÄISCHE PATENTSCHRIFT

(11) **EP 1 879 820 B1**
(45) Veröffentlichungstag und Bekanntmachung des Hinweises auf die Patenterteilung: **23.07.2008**
(21) Anmeldenummer: 07723550.5
(22) Anmeldetag: 23.03.2007
(51) Int. Cl.: B65G 59/02, B65G 59/04, B65G 61/00, B21D 43/24, B65H 7/12

(54) **VERFAHREN UND VORRICHTUNG ZUM ÜBERWACHTEN TRANSPORT VON BLECHEN**
METHOD AND DEVICE FOR THE MONITORED TRANSPORT OF METAL SHEETS
PROCÉDÉ ET DISPOSITIF DE TRANSPORT SURVEILLÉ DE TÔLES

(30) Priorität: 31.05.2006 DE 102006025387
(43) Veröffentlichungstag der Anmeldung: 23.01.2008
(73) Patentinhaber: Pepperl + Fuchs GmbH, 68307 Mannheim (DE)
(72) Erfinder: HELM, Wolfgang, 64625 Bensheim (DE)
(74) Vertreter: Schiffer, Axel Martin
(86) Internationale Anmeldenummer: PCT/EP2007/002602
(87) Internationale Veröffentlichungsnummer: WO 2007/137643

(56) Entgegenhaltungen:
- DE-U1- 20 018 193
- JP-A- 7 053 095
- JP-A- 58 078 935

## Beschreibung

Die Erfindung betrifft ein Verfahren zum überwachten Transport von Blechen, insbesondere in eine Umformanlage, gemäß dem Oberbegriff des Anspruchs 1. Bei einem solchen Verfahren ist vorgesehen, dass ein Blech durch einen Feeder von einer ersten Position aufgenommen wird und das Blech mit dem Feeder zu einer zweiten Position bewegt wird.

Die Erfindung betrifft ferner eine Vorrichtung zum überwachten Transport von Blechen, insbesondere in eine Umformanlage, gemäß dem Oberbegriff des Anspruchs 8. Eine solche Vorrichtung ist ausgestattet mit einem verfahrbaren Feeder, mittels dem ein Blech von einer ersten Position zu einer zweiten Position transportierbar und bevorzugt dort ablegbar ist.

Ein solches Verfahren und eine solche Vorrichtung sind beispielsweise aus der DE 43 22 963 A1 bekannt. Diese Druckschrift lehrt, bei blechverarbeitenden Maschinen Bleche mit einem Feeder mit Saugeinrichtung von einem Blechstapel abzuheben und einer Bearbeitungsmaschine zuzuführen. Hierbei kann es unter bestimmten Umständen vorkommen, dass zwei oder mehr Bleche aneinander anhaften. Gelangt ein solches Blech-Paket aus zwei oder mehr Blechen in die Bearbeitungsmaschine, so kann das Werkzeug Schaden nehmen. Um dies zu verhindern, lehrt die DE 43 22 963 A1 eine Doppelblechkontrolle durchzuführen. Hierzu wird während des Transports eine Gewichtsbestimmung des dem Stapel entnommenen Bleches durchgeführt.

Die DE 35 05 671 A1 offenbart ein Messverfahren und eine Messanordnung, bei denen Doppelblechlagen durch Bestimmung der Induktivität eines Elektromagneten erkannt werden sollen.

Eine weitere Vorrichtung zur Doppelblecherkennung ist aus der JP 10-293012 A bekannt. Bei dieser bekannten Vorrichtung ist im Bereich des Blechstapels ein Rahmen vorgesehen, an dem eine Lichtschranke angeordnet ist. Beim Anheben der Bleche werden diese durch die Lichtschranke durchgeführt, wobei die Blechdicke mittels der Lichtschranke detektiert wird.

Aus der DE 692 04 410 T2 sind eine Vorrichtung und ein Verfahren zum Zuführen von halbfertigen Teilen von einem Stapel zu einer Umformmaschine bekannt. Die Vorrichtung weist eine Detektionseinrichtung zum Detektieren einer Veränderung in der Lage oder der Geometrie des Stapels auf.

Aus der JP 58-078 935 ist auch eine Vorrichtung zum überwachten Transport von Blechen bekannt.

Aufgabe der Erfindung ist es, ein Verfahren und eine Vorrichtung zum überwachten Transport von Blechen, insbesondere in eine Umformanlage, anzugeben, die eine besondere hohe Zuverlässigkeit und Betriebssicherheit gewährleisten.

Die Aufgabe wird erfindungsgemäß durch ein Verfahren mit den Merkmalen des Anspruchs 1 und eine Vorrichtung mit den Merkmalen des Anspruchs 8 gelöst. Bevorzugte Ausführungsbeispiele sind in den jeweils abhängigen Ansprüchen angegeben.

Das erfindungsgemäße Verfahren ist dadurch gekennzeichnet, dass bei der Bewegung des Feeders zur zweiten Position ein erstes Sensorelement, das am Feeder angeordnet ist, sowie ein zweites Sensorelement, das an der zweiten Position angeordnet ist, in eine signalmäßige Anordnung gebracht werden, und dass auf Grundlage eines zwischen den Sensorelementen übertragenen Messsignals die Blechzahl am Feeder und/oder an der zweiten Position bestimmt wird.

Ein Grundgedanke der Erfindung kann darin gesehen werden, zur Bestimmung der Blechzahl am Feeder und/oder der zweiten Position eine von zwei Sensorelementen gebildete Messstrecke vorzusehen. Dabei ist ein Sensorelement auf dem beweglichen Feeder montiert und das zweite Sensorelement bezüglich dem Maschinenbett fest angeordnet. Eine solche Anordnung ermöglicht es, die Sensorelemente bei vergleichsweise einfachem Aufbau nahe an der Transportbahn der Bleche anzuordnen, wodurch eine besonders hohe Messgenauigkeit gewährleistet wird. Durch Anordnung eines der beiden Sensorelemente auf dem fahrenden Feeder kann darüber hinaus der Gefahr der Kollision des Feeders mit einem Sensorelement entgegengetreten werden. Dies gilt insbesondere auch für den Fall dass, beispielsweise aufgrund einer Änderung der Form der Bleche, eine Änderung des Verfahrweges des Feeders erforderlich wird. Somit gewährleistet das erfindungsgemäße Verfahren eine besonders hohe Betriebssicherheit.

Nach der Erfindung befinden sich die beiden Sensorelemente dann in einer signalmäßigen Anordnung, die eine Blechzahlbestimmung zulässt, wenn der Feeder zur zweiten Position hin verfahren ist. Bei der signalmäßigen Anordnung sind die beiden Sensorelemente geeigneterweise übereinander angeordnet.

Die Blechzahlbestimmung wird erfindungsgemäß dann durchgeführt, wenn sich der Feeder in der zweiten Position befindet. Ist der Feeder aus der zweiten Position herausgefahren, können sich daher die beiden Sensorelemente außerhalb ihrer Signalreichweite befinden.

Mittels des erfindungsgemäßen Verfahrens kann beispielsweise festgestellt werden, ob unerwünschterweise ein Doppelblech, ein Mehrfachblech oder ein Fehlblech vorliegt. Entspricht die gemessene Blechzahl nicht der gewünschten Blechzahl, so kann vorgesehen sein, den weiteren Transport der Bleche und/oder den Betrieb der Umformanlage automatisch zu stoppen.

Eine besonders zuverlässige und wirtschaftliche Blechzahlerkennung kann nach der Erfindung dadurch gewährleistet werden, dass die Sensorelemente akustische Sensorelemente, insbesondere Ultraschall-Sensorelemente sind. Hierin kann ein eigenständiger Erfindungsaspekt gesehen werden. Grundsätzlich können die Sensorelemente aber beispielsweise auch kapazitive Sensorelemente, induktive Sensorelemente oder optische Sensorelemente sein.

Eine besonders einfach ausführbare Signalverarbeitung kann nach der Erfindung dadurch gegeben sein, dass zur Bestimmung der Blechzahl ein durch das Blech durchtretendes Transmissionssignal herangezogen wird. In diesem Fall wird von einem der beiden Sensorelemente ein Signal ausgesandt und von dem anderen Sensorelement der nach Durchgang des Signales durch das Blechelement verbleibende Restsignalpegel bestimmt. Insbesondere bei einer akustischen Messung ist es vorteilhaft, dass sich die beiden Sensorelemente bei der Bestimmung der Blechzahl beiderseits der Flachseiten des Bleches, insbesondere etwa mittig am Blech, befinden. Hierdurch können unerwünschte Beugungseffekte an Blechkanten reduziert werden.

Für eine besonders hohe Messgenauigkeit ist vorteilhaft, dass die Bestimmung der Blechzahl bei stillstehendem Feeder durchgeführt wird. Dies ist besonders bei akustischen Messungen vorteilhaft, da hier eine Relativbewegung der Sensorelemente untereinander und/oder eine Relativbewegung des Bleches bezüglich der Sensorelemente zu einer Signalverfälschung führen kann. Grundsätzlich kann aber auch vorgesehen sein, den Feeder mit dem Blech und dem ersten Sensorelement bei der Bestimmung der Blechzahl langsam bezüglich dem zweiten Sensorelement zu bewegen, wobei die Relativgeschwindigkeit geeigneterweise maximal 2,1 m/min beträgt. Vorzugsweise wird die Blechzahlbestimmung mit einem Stoppbefehl an den Feeder oder kurz danach aktiviert.

Grundsätzlich kann vorgesehen sein, dass das Blech nach der Blechzahlbestimmung in der zweiten Position von dem Feeder weiter in eine dritte Position gefahren wird und erst dort freigegeben wird. Besonders bevorzugt ist es jedoch, dass das Blech an der zweiten Position vom Feeder freigegeben und abgelegt wird. In diesem Fall findet die Blechzahlbestimmung dann statt, wenn sich das Blech am Ablagepunkt befindet. Die Blechzahlbestimmung kann vorgesehen werden solange das Blech noch vom Feeder gehalten wird. Sie kann aber auch vorgesehen werden nachdem das Blech in der zweiten Position vom Feeder freigegeben wurde.

Wird von dem Feeder an der ersten Position ein Doppelblech oder auch ein Mehrfachblech aufgenommen, so besteht die Gefahr, dass sich das zusätzliche Blech bei der Bewegung des Feeders löst und abfällt und/oder dass es sich gegenüber dem anderen Blech seitlich verschiebt. Dies kann insbesondere beim Abbremsen des Feeders aufgrund der Massenträgheit des zusätzlichen Bleches geschehen. Dabei besteht die Möglichkeit, dass das zusätzliche Blech außerhalb des Nachweisbereiches der beiden Sensorelemente zu liegen kommt. Vor diesem Hintergrund ist es zur weiteren Erhöhung der Betriebssicherheit vorteilhaft, dass seitlich versetzt zur zweiten Position zumindest ein weiteres, insbesondere akustisches, Sensorelement zum Nachweis unbeabsichtigt vorhandener Bleche vorgesehen wird. Das weitere Sensorelement kann beispielsweise auch induktiv, kapazitiv oder optisch ausgebildet sein.

Zum Nachweis unbeabsichtigt vorhandener Bleche können beispielsweise Sensorelementpaare mit fest zueinander angeordneten Einzelsensorelementen vorgesehen sein. Besonders vorteilhaft ist es jedoch, dass, insbesondere nach der Freigabe des Bleches, der Feeder so bewegt wird, dass das am Feeder angeordnete erste Sensorelement mit dem weiteren Sensorelement in eine signalmäßige Anordnung gelangt, in der auf Grundlage eines zwischen dem ersten Sensorelement und dem weiteren Sensorelement übertragenen Messsignals ein unbeabsichtigt vorhandenes Blech nachweisbar ist. Bei dieser Ausführungsform ist zum Nachweis unbeabsichtigt vorhandener Bleche nur ein einziges zusätzliches Sensorelement erforderlich, das mit dem am Feeder angeordneten ersten Sensorelement messtechnisch zusammenwirkt. Insbesondere kann vorgesehen sein, den Feeder nach Freigabe des Bleches nicht gleich zur ersten Position zurückzufahren, sondern diesen zunächst zum weiteren Sensorelement hinzufahren, um zu prüfen, ob sich zwischen dem am Feeder angeordneten Sensorelement und dem weiteren Sensorelement ein unbeabsichtigt vorhandenes Blech befindet. Bei dieser Ausführungsform wird der Möglichkeit entgegengewirkt, dass der Feeder oder ein vom Feeder abfallendes Blech an ein Sensorelement stößt und dieses beschädigt. Zum Nachweis unbeabsichtigt vorhandene Bleche kann auch zumindest ein zusätzliches Sensorelement am Feeder angeordnet sein.

Das erfindungsgemäße Verfahren ist dadurch gekennzeichnet, dass ein Sensor zur Bestimmung der am Feeder und/oder der zweiten Position vorliegenden Blechzahl vorgesehen ist, wobei der Sensor ein erstes Sensorelement aufweist, das mit dem Feeder beweglich am Feeder angeordnet ist, sowie ein zweites Sensorelement, das an der zweiten Position angeordnet ist.

Die erfindungsgemäße Vorrichtung kann insbesondere zur Durchführung des erfindungsgemäßen Verfahrens eingesetzt werden, wodurch sich die in diesem Zusammenhang beschriebenen Vorteile erzielen lassen.

Für eine besonders wirtschaftliche und zuverlässige Blechzahlbestimmung ist es vorteilhaft, dass der Sensor ein akustischer Sensor, insbesondere ein Ultraschallsensor ist. Grundsätzlich kann er jedoch auch als kapazitiver Sensor, als induktiver Sensor oder als optischer Sensor ausgebildet sein.

Ferner ist es nach der Erfindung vorteilhaft, dass das an der zweite Position angeordnete zweite Sensorelement ein Sender ist und das am Feeder angeordnete erste Sensorelement ein Empfänger ist. Dies ist insbesondere dann zweckmäßig, wenn der Sensor ein akustischer Sensor ist, da in diesem Fall der Empfänger häufig verschmutzungsempfindlicher ist als der Sender. Ist der Empfänger oberhalb der geförderten Bleche auf Feeder angeordnet, so ist die Gefahr verringert, dass Schmutzteilchen von den Blechen zum Empfänger gelangen können. Darüber hinaus tritt durch die Bewegung des Feeders mitsamt dem Empfänger auch eine Reinigungsfunktion am Empfänger auf.

Vorzugsweise sind die beiden Sensorelemente so angeordnet, dass sie bei einer Ablagestellung des Feeders übereinander mit dazwischenliegendem Blech positioniert sind. Unter einer Ablagestellung wird eine solche Stellung verstanden, in der der Feeder das aufgenommene Blech freigibt. Die Ablagestellung kann insbesondere an der zweiten Position gegeben sein.

Grundsätzlich kann vorgesehen sein, das Blech mit der Vorrichtung unmittelbar in den Arbeitsbereich der Umformanlage zu übergeben. In diesem Fall kann die zweite Position im Arbeitsbereich der Umformanlage angeordnet sein. Nach der Erfindung ist es jedoch vorteilhaft, dass die zweite Position an einer Zufuhrbahn für den Weitertransport des Bleches in die Umformanlage angeordnet ist. In diesem Fall wird das Blech nicht unmittelbar im Arbeitsbereich der Umformanlage abgelegt, sondern auf einer zusätzlichen Zufuhrbahn, die den Weitertransport des Bleches in den Arbeitsbereich übernimmt.

Die Umformanlage kann beispielsweise eine Stanzmaschine, eine Presse und/oder eine Biegemaschine aufweisen.

Besonders zweckmäßig ist es, dass, insbesondere an der Zufuhrbahn, zumindest ein weiteres Sensorelement zum Nachweis unbeabsichtigt verlorener Bleche angeordnet ist. Hierdurch kann verhindert werden, dass zusätzliche Bleche, die unter Umständen bei der Bewegung des Feeders auf die Zufuhrbahn abfallen, und die vom ersten und zweiten Sensorelement nicht nachweisbar sind, mit der Zufuhrbahn in den Arbeitsbereich der Umformanlage gefördert werden. Insbesondere kann vorgesehen sein, den Feeder mit dem ersten Sensorelement nach dem Ablegen des Bleches wie im Zusammenhang mit dem erfindungsgemäßen Verfahren erläutert zum weiteren Sensorelement zu fahren, um dann eine Messung zum Nachweis unbeabsichtigt vorhandener Bleche zwischen dem ersten Sensorelement und dem weiteren Sensorelement durchzuführen. Das zumindest eine Sensorelement kann beispielsweise auch am Feeder angeordnet sein.

Eine konstruktiv besonders einfache und wirtschaftliche Vorrichtung kann nach der Erfindung dadurch erhalten werden, dass der Feeder einen Sauggreifer aufweist. Ein solcher Sauggreifer kann beispielsweise Saugnäpfe aufweisen, die mit Unterdruck arbeiten. Zusätzlich oder alternativ kann der Feeder beispielsweise einen Magnetgreifer und/oder einen mechanischen Greifer aufweisen.

Die Erfindung wird nachfolgend anhand bevorzugter Ausführungsbeispiele näher erläutert, die schematisch in den Figuren dargestellt sind. In den Figuren zeigen:
- Fig. 1 bis 3: Ein Ausführungsbeispiel einer erfindungsgemäßen Vorrichtung in verschiedenen Verfahrensstadien bei der Durchführung des erfindungsgemäßen Verfahrens; und
- Fig. 4: ein weiteres Aufführungsbeispiel einer erfindungsgemäßen Vorrichtung beim Nachweis abgefallener Bleche.

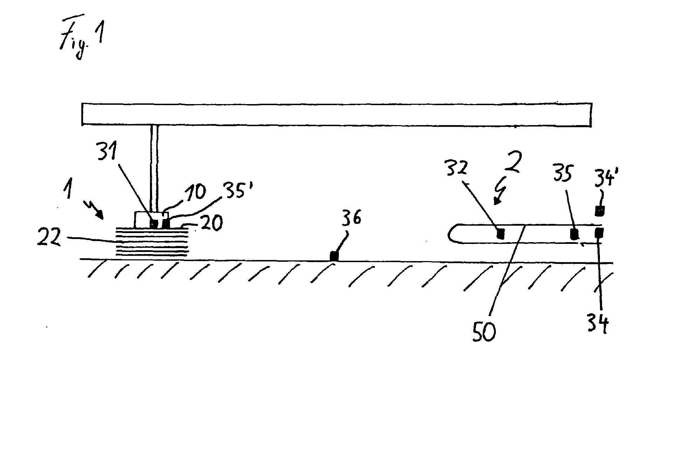

Eine erfindungsgemäße Vorrichtung ist in den Figuren 1 bis 3 dargestellt. Die Vorrichtung dient zum Transport von Blechen 20 von einem in einer ersten Position 1 angeordneten Blechstapel 22 zu einer zweiten Position 2 an einer Zufuhrbahn 50 einer Kaltumformanlage. Die Kaltumformanlage kann beispielsweise eine Stanze, eine Presse und/oder eine Biegemaschine aufweisen.

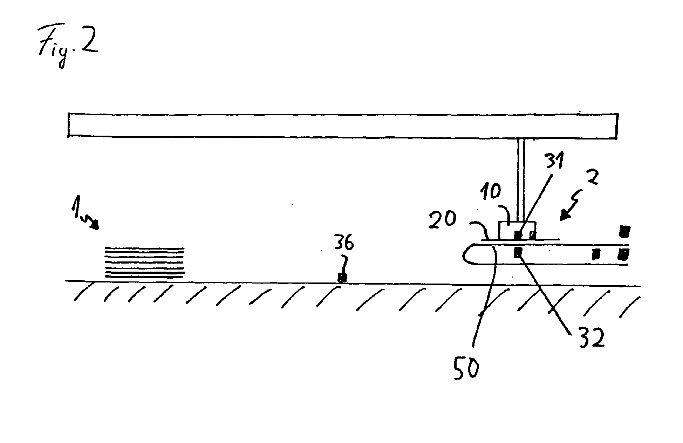

Zum Verfahren der Bleche 20 weist die Vorrichtung einen Feeder 10 auf. In dem in Fig. 1 dargestellten Verfahrensstadium ist dieser Feeder 10 oberhalb des Blechstapels 22 in der ersten Position angeordnet. Dort nimmt der Feeder 10, der beispielsweise einen Sauggreifer aufweisen kann, ein Blech 20 auf und transportiert dieses etwa zwei bis drei Meter weit zum Umformprozess in die zweite Position 2. Dieser Zustand ist in Fig. 2 dargestellt. Das Blech 20 wird dann vom Feeder 10 freigegeben, auf der als Förderband ausgebildeten Zufuhrbahn 50 abgeladen und zum Umformwerkzeug weitertransportiert.

Unter bestimmten Umständen kann es, beispielsweise aufgrund von Adhäsionskräften zwischen übereinander liegenden Blechen 20, dazu kommen, dass zwei oder mehr Bleche 20 beim Aufnehmen vom Blechstapel 22 aneinanderhaften. Um zu verhindern, dass ein solches Blechpaket dem Umformprozess zugeführt wird, sind bei der erfindungsgemäßen Vorrichtung zwei akustische Sensorelemente 31 und 32 vorgesehen. Das als Ultraschall-Sender ausgebildete Sensorelement 32 ist direkt unterhalb des Abladepunktes an der zweiten Position 2 fest montiert. Das als Ultraschall-Empfänger ausgebildete Sensorelement 31 ist auf dem fahrenden Feeder 10 montiert. Es ist so angeordnet, dass es sich zum Zeitpunkt der Ablage des Bleches 20 in der zweiten Position 2 exakt über dem Sensorelement 32 befindet. Da der Feeder 10 bei der Ablage in der Regel gestoppt ist, erlaubt diese Anordnung der Sensorelemente 31, 32 einen Nachweis von Doppel- oder Mehrfachblechen bei stehendem Feeder. Werden ein Doppelblech oder Mehrfachbleche erkannt, so kann die Vorrichtung automatisch gestoppt werden.

Die Sensoranordnung ist insbesondere geeignet zur Erkennung von Blechdicken bis zu 2,5 mm.

Entlang der Transportstrecke des Feeders 10 ist zwischen der ersten Position 1 und der zweiten Position 2 ein weiteres Sensorelement 36 vorgesehen, das beispielsweise als induktives Sensorelement ausgebildet sein kann. Dieses weitere Sensorelement 36 dient dazu, beim Transport abgefallene Doppel- oder Mehrfachbleche nachzuweisen.

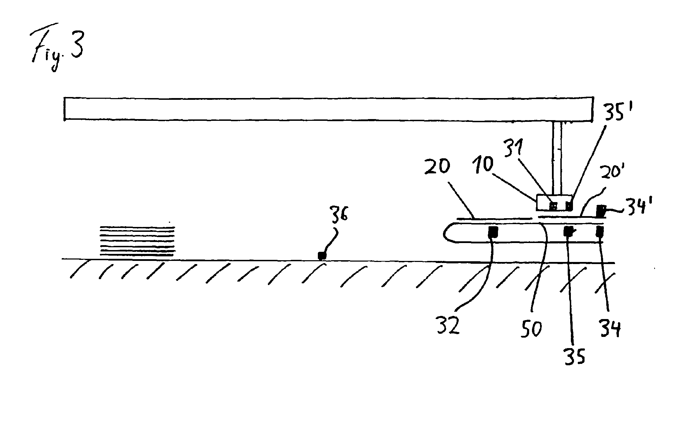

Ein Abfallen von Doppel- oder Mehrfachblechen vom Feeder 10 kann insbesondere beim Abbremsen des Feeders 10 in der zweiten Position 2 auftreten. In diesem Fall können die abgefallenen Bleche, in Fig. 3 mit dem Bezugszeichen 20' gekennzeichnet, auf der Zufuhrbahn 50 zwischen der zweiten Position 2 und dem Umformwerkzeug zu liegen kommen. Zum Nachweis dieser abgefallenen Bleche 20' sind mehrere weitere Sensoren 34, 34', 35, 35' vorgesehen.

Die als Ultraschall-Sensoren ausgebildeten Sensoren 34, 34' sind zwischen der zweiten Position 2 und dem Umformbereich an der Zufuhrbahn 50 fest installiert. Hierdurch kann gewährleistet werden, dass die Relativgeschwindigkeit des Bleches 20' und den Sensorelementen 34, 34' bei der Messung Null beträgt.

Zusätzlich oder alternativ kann ein weiteres Paar Sensorelemente 35, 35' vorgesehen sein. Das erste Sensorelement 35 ist dabei hinter dem Ablagebereich fest an der Zufuhrbahn 50 angeordnet, das zweite weitere Sensorelement 35' hingegen am Feeder 10, so dass es mit dem Feeder 10 mitfährt. Durch Verfahren des Feeders 10 können die Sensorelemente 35 und 35' nach Ablage des Bleches 20 zum Nachweis eines abgefallenen Bleches 20' übereinander angeordnet werden. Dieser Zustand ist in Fig. 3 dargestellt. Durch Anordnung des Sensorelementes 35' am Feeder 10 kann verhindert werden, dass der Feeder 10 an dieses Sensorelement 35' stößt. Somit ist das Sensorelement 35' auch bei einem längeren Verfahrweg des Feeders 10 sicher.

Beispielsweise kann es sich bei dem Sensorelement 35 um einen Empfänger und beim Sensorelement 35' um einen Sender handeln. Jedoch ist auch eine umgekehrte Anordnung möglich.

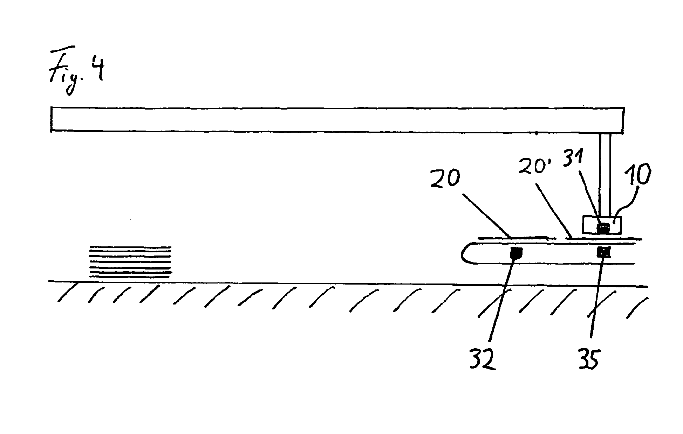

Ein weiteres Ausführungsbeispiel einer erfindungsgemäßen Vorrichtung ist in Fig. 4 dargestellt. Das Ausführungsbeispiel der Fig. 4 unterscheidet sich vom Ausführungsbeispiel der Figuren 1 bis 3 dadurch, dass nach dem Ausführungsbeispiel der Fig. 4 zum Nachweis abgefallener Bleche 20', die an der Zufuhrbahn 50 zum Liegen kommen, am Feeder 10 kein zusätzliches Sensorelement 35' vorgesehen ist. Stattdessen wird zum Nachweis dieser abgefallenen Bleche 20' das erste Sensorelement 31 verwendet, das auch bei der Mehrfachblecherkennung während der Ablage des Bleches 20 zum Einsatz kommt und dabei oberhalb des zweiten Sensorelementes 32 angeordnet wird. Zum Nachweis abgefallener Bleche 20' wird der Feeder 10 nach Ablage des Bleches 20 weiter verfahren, wodurch das am Feeder 10 angeordnete erste Sensorelement 31 oberhalb des weiteren Sensorelementes 35 positioniert wird. Nun kann zwischen den Sensorelementen 31 und 35 eine Blechdickenbestimmung durchgeführt werden und damit das abgefallene Blech 20' nachgewiesen werden. Bei einer solchen Anordnung ist die Zahl der benötigten Sensorelemente reduziert.

## Patentansprüche

1. Verfahren zum überwachten Transport von Blechen (20), insbesondere in eine Umformanlage,
bei dem ein Blech (20) durch einen Feeder (10) von einer ersten Position (1) aufgenommen wird und das Blech (20) mit dem Feeder (10) zu einer zweiten Position (2) bewegt wird,
**dadurch gekennzeichnet ,**
**dass** bei der Bewegung des Feeders zur zweiten Position (2) ein erstes Sensorelement (31), das am Feeder (10) angeordnet ist, sowie ein zweites Sensorelement (32), das an der zweiten Position (2) angeordnet ist, in eine signalmäßige Anordnung gebracht werden,
und **dass** auf Grundlage eines zwischen den Sensorelementen (31, 32) übertragenen Messsignals die Blechzahl am Feeder (10) und/oder an der zweiten Position (2) bestimmt wird.

2. Verfahren nach Anspruch 1,
**dadurch gekennzeichnet ,**
**dass** die Sensorelemente (31, 32) akustische Sensorelemente, insbesondere Ultraschall-Sensorelemente sind.

3. Verfahren nach einem der Ansprüche 1 oder 2,
**dadurch gekennzeichnet ,**
**dass** zur Bestimmung der Blechzahl ein durch das Blech (20) durchtretendes Transmissionssignal herangezogen wird.

4. Verfahren nach einem der Ansprüche 1 bis 3,
**dadurch gekennzeichnet ,**
**dass** die Bestimmung der Blechzahl bei stillstehendem Feeder (10) durchgeführt wird.

5. Verfahren nach einem der Ansprüche 1 bis 4,
**dadurch gekennzeichnet ,**
**dass** das Blech (20) an der zweiten Position (2) vom Feeder (10) freigegeben und abgelegt wird.

6. Verfahren nach einem der Ansprüche 1 bis 5,
**dadurch gekennzeichnet ,**
**dass** seitlich versetzt zur zweiten Position (2) zumindest ein weiteres, insbesondere akustisches, Sensorelement (34, 35, 36) zum Nachweis unbeabsichtigt vorhandener Bleche (20) vorgesehen wird.

7. Verfahren nach Anspruch 6,
**dadurch gekennzeichnet ,**
**dass**, insbesondere nach der Freigabe des Bleches (20), der Feeder (10) so bewegt wird, dass das am Feeder (10) angeordnete erste Sensorelement (31) mit dem weiteren Sensorelement (35) in eine signalmäßige Anordnung gelangt, in der auf Grundlage eines zwischen dem ersten Sensorelement (31) und dem weiteren Sensorelement (35) übertragenen Messsignals ein unbeabsichtigt vorhandenes Blech (20') nachweisbar ist.

8. Vorrichtung zum überwachten Transport von Blechen, insbesondere in eine Umformanlage,
mit einem verfahrbaren Feeder (10), mittels dem ein Blech (20) von einer ersten Position (1) zu einer zweiten Position (2) transportierbar und bevorzugt dort ablegbar ist ist,
insbesondere zur Durchführung des Verfahrens nach einem der vorhergehenden Ansprüche,
**dadurch gekennzeichnet ,**
**dass** ein Sensor zur Bestimmung der am Feeder (10) und/oder der zweiten Position (2) vorliegenden Blechzahl vorgesehen ist, wobei der Sensor ein erstes Sensorelement (31) aufweist, das mit dem Feeder (10) beweglich am Feeder (10) angeordnet ist, sowie ein zweites Sensorelement (32), das an der zweiten Position (2) angeordnet ist.

9. Vorrichtung nach Anspruch 8,
**dadurch gekennzeichnet ,**
**dass** der Sensor ein akustischer Sensor, insbesondere ein Ultraschallsensor ist.

10. Vorrichtung nach einem der Ansprüche 8 oder 9,
**dadurch gekennzeichnet ,**
**dass** das an der zweiten Position (2) angeordnete zweite Sensorelement (32) ein Sender ist und
**dass** das am Feeder (10) angeordnete erste Sensorelement (31) ein Empfänger ist.

11. Vorrichtung nach einem der Ansprüche 8 bis 10,
**dadurch gekennzeichnet ,**
**dass** die beiden Sensorelemente (31, 32) so angeordnet sind, dass sie bei einer Ablagestellung des Feeders (10) übereinander mit dazwischenliegendem Blech (20) positioniert sind.

12. Vorrichtung nach einem der Ansprüche 8 bis 11,
**dadurch gekennzeichnet ,**
**dass** die zweite Position (2) an einer Zufuhrbahn (50) für den Weitertransport des Bleches (20) in die Umformanlage angeordnet ist.

13. Vorrichtung nach Anspruch 12,
**dadurch gekennzeichnet ,**
**dass** an der Zufuhrbahn (50) zumindest ein weiteres Sensorelement (34, 35) zum Nachweis unbeabsichtigt vorhandener Bleche (20') angeordnet ist.

14. Vorrichtung nach einem der Ansprüche 8 bis 13,
**dadurch gekennzeichnet ,**
**dass** der Feeder (10) einen Sauggreifer aufweist.

## Claims

1. Method for the monitored conveying of plates (20), particularly into a forming plant,
in which a plate (20) is taken up by a feeder (10) from a first position (1) and the plate (20) with the feeder (10) is moved to a second position (2),
**characterized in that**
during the movement of the feeder to the second position (2) a first sensor element (31) located at the feeder (10), as well as a second sensor element (32) located in the second position (2) are brought into a signal-based arrangement and that on the basis of a measurement signal transmitted between the sensor elements (31, 32) the number of plates at the feeder (10) and/or in the second position (2) is determined.

2. Method according to claim 1,
**characterized in that**
the sensor elements (31, 32) are acoustic sensor elements, particularly ultrasonic sensor elements.

3. Method according to one of the claims 1 or 2,
**characterized in that**
a transmission signal passing through the plate (20) is used for determining the number of plates.

4. Method according to one of the claims 1 to 3,
**characterized in that**
the plate number determination takes place with the feeder (10) stationary.

5. Method according to one of the claims 1 to 4,
**characterized in that**
in the second position (2) the plate (20) is released and deposited by feeder (10).

6. Method according to one of the claims 1 to 5,
**characterized in that**
there is at least one further, particularly acoustic sensor element (34, 35), 36) for the detection of unintentionally present plates (20) in a laterally displaced manner with respect to the second position (2).

7. Method according to claim 6,
**characterized in that**,
particularly following the release of the plate (20), the feeder (10) is moved in such a way that the first sensor element (31) located at the feeder (10) passes into a signal-based arrangement with the further sensor element (35), in which on the basis of a measurement signal transmitted between the first sensor element (31) and the further sensor element (35) an unintentionally present plate (20') can be detected.

8. Device for the monitored conveying of plates, particularly into a forming plant,
with a movable feeder (10), by means of which a plate (20) can be conveyed from a first position (1) to a second position (2) and can preferably be deposited there,
particularly for performing the method according to one of the preceding claims,
**characterized in that**
a sensor is provided for determining the number of plates at the feeder (10) and/or the second position (2), said sensor having a first sensor element (31) movably arranged with the feeder (10) at the feeder (10), as well as a second sensor element (32) located at the second position (2).

9. Device according to claim 8,
**characterized in that**
the sensor is an acoustic sensor, particularly an ultrasonic sensor.

10. Device according to one of the claims 8 or 9,
**characterized in that**
the second sensor element (32) located in the second position (2) is a transmitter and
that the first sensor element (31) located at the feeder (10) is a receiver.

11. Device according to one of the claims 8 to 10,
**characterized in that**
the two sensor elements (31, 32) are so positioned that they are located above one another with the plate (20) between them in a deposition position of the feeder (10).

12. Device according to one of the claims 8 to 11,
**characterized in that**
the second position (2) is located at a feed path (50) for further conveying plate (20) into the forming plant.

13. Device according to claim 12,
**characterized in that**
there is at least one further sensor element (34, 35) at the feed path (50) for detecting unintentionally present plates (20').

14. Device according to one of the claims 8 to 13,
**characterized in that**
the feeder (10) has a suction gripper.

## Revendications

1. Procédé pour le transport surveillé de tôles (20), en particulier dans une installation de façonnage,
dans lequel une tôle (20) est reçue par un dispositif d'alimentation (10) depuis une première position (1) et la tôle (20) est déplacée avec le dispositif d'alimentation (10) jusqu'à une deuxième position (2),
***caractérisé***
***en ce que****,* lors du mouvement du dispositif d'alimentation vers la deuxième position (2), un premier élément capteur (31) qui est placé sur le dispositif d'alimentation (10) ainsi qu'un deuxième élément capteur (32) qui est placé dans la deuxième position (2) sont placés dans un agencement de signalisation,
et ***en ce qu'**à* partir d'un signal de mesure transmis entre les deux éléments capteurs (31, 32), le nombre de tôles sur le dispositif d'alimentation (10) et/ou dans la deuxième position (2) est déterminé.

2. Procédé selon la revendication 1, ***caractérisé en ce que*** les éléments capteurs (31, 32) sont des éléments capteurs acoustiques, en particulier des éléments capteurs à ultrasons.

3. Procédé selon l'une quelconque des revendications 1 ou 2, ***caractérisé en* ce *que****,* pour déterminer le nombre de tôles, on utilise un signal de transmission traversant la tôle (20).

4. Procédé selon l'une quelconque des revendications 1 à 3, ***caractérisé* en ce *que*** la détermination du nombre de tôles est réalisée avec le dispositif d'alimentation (10) arrêté.

5. Procédé selon l'une quelconque des revendications 1 à 4, ***caractérisé* en ce *que*** la tôle (20) est libérée et déposée du dispositif d'alimentation (10) dans la deuxième position (2).

6. Procédé selon l'une quelconque des revendications 1 à 5, ***caractérisé en ce que**,* de manière décalée latéralement par rapport à la deuxième position (2), il est prévu au moins un autre élément capteur (34, 35, 36), en particulier acoustique, pour détecter des tôles (20) présentes de manière non intentionnelle.

7. Procédé selon la revendication 6, ***caractérisé en* ce *qu'****en* particulier après la libération de la tôle (20), le dispositif d'alimentation (10) est déplacé de telle sorte que le premier élément capteur (31) placé sur le dispositif d'alimentation (10) arrive avec l'autre élément capteur (35) dans un agencement de signalisation dans lequel, à partir d'un signal de mesure transmis entre le premier élément capteur (31) et l'autre élément capteur (35), une tôle (20') présente de manière non intentionnelle peut être détectée.

8. Dispositif pour le transport surveillé de tôles, en particulier dans une installation de façonnage,
avec un dispositif d'alimentation mobile (10) au moyen duquel une tôle (20) peut être transportée d'une première position (1) à une deuxième position (2) et y être de préférence déposée, en particulier pour appliquer le procédé selon l'une quelconque des revendications précédentes,
***caractérisé en* ce qu'**un capteur est prévu pour déterminer le nombre de tôles présentes sur le dispositif d'alimentation (10) et/ou dans la deuxième position (2), le capteur comprenant un premier élément capteur (31) qui est placé mobile avec le dispositif d'alimentation (10) sur le dispositif d'alimentation (10), ainsi qu'un deuxième élément capteur (32) qui est placé dans la deuxième position (2).

9. Dispositif selon la revendication 8,
***caractérisé en ce que*** le capteur est un capteur acoustique, en particulier un capteur à ultrasons.

10. Dispositif selon l'une quelconque des revendications 8 ou 9,
***caractérisé***
***en ce que*** le deuxième élément capteur (32) placé dans la deuxième position (2) est un émetteur, et
***en ce que*** le premier élément capteur (31) placé sur le dispositif d'alimentation (10) est un récepteur.

11. Dispositif selon l'une quelconque des revendications 8 à 10, ***caractérisé* en ce *que*** les deux éléments capteurs (31, 32) sont disposés de telle manière que, dans une position de dépose du dispositif d'alimentation (10), ils sont positionnés l'un au-dessus de l'autre avec la tôle (10) entre eux.

12. Dispositif selon l'une quelconque des revendications 8 à 11, ***caractérisé en* ce *que*** la deuxième position (2) est située sur une voie d'alimentation (50) pour la suite du transport de la tôle (20) dans l'installation de façonnage.

13. Dispositif selon la revendication 12, ***caractérisé en ce que*** sur la voie d'alimentation (50) est placé au moins un autre élément capteur (34, 35) pour détecter des tôles (20') présentes de manière non intentionnelle.

14. Dispositif selon l'une quelconque des revendications 8 à 13, ***caractérisé* en ce *que*** le dispositif d'alimentation (10) comporte une araignée à ventouse.
